# EUROPEAN PATENT SPECIFICATION

(11) **EP 1 795 767 B1**
(45) Date of publication and mention of the grant of the patent: **16.07.2008**
(21) Application number: 06114176.8
(22) Date of filing: 18.05.2006
(51) Int. Cl.: F16B 13/06

(54) **Expansion Screw**
Ausdehnungsschraube
Vis à expansion

(30) Priority: 09.12.2005 CN 200510130460
(43) Date of publication of application: 13.06.2007
(73) Proprietor: Joker Industrial Co., Ltd., Changhua, (TW)
(72) Inventor: Huang, Pan-Ching, Hsienhsi Shiang Changhua (TW); Chen, Chih-Tsung, Changhua (TW)
(74) Representative: Viering, Jentschura & Partner

(56) References cited:
- DE-A1- 2 945 881
- FR-A1- 2 318 334

## Description

### BACKGROUND OF THE INVENTION

### 1. Field of the Invention

The invention relates to an expansion screw according to the preamble of claim 1.

Accordingly, the present invention generally relates to an expansion screw and particularly to an expansion screw that has at least three folding sections to generate a bracing effect when subject to action of a tensile force tool to prevent construction defect and damage resulting from excessive compression on the rim of the working holes.

### 2. Description of the Prior Art

An expansion screw of the initially-mentioned type is known, e.g., from FR 2 318 334 A.

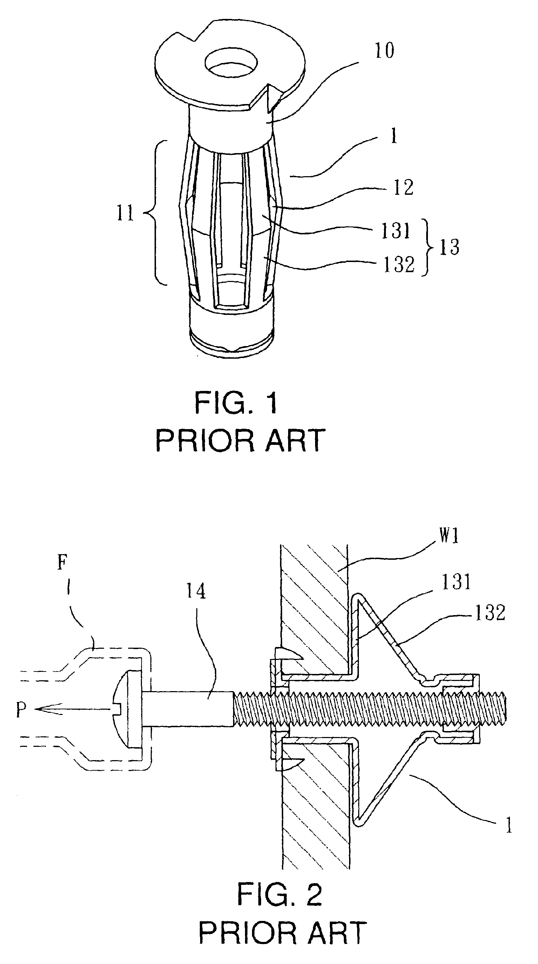

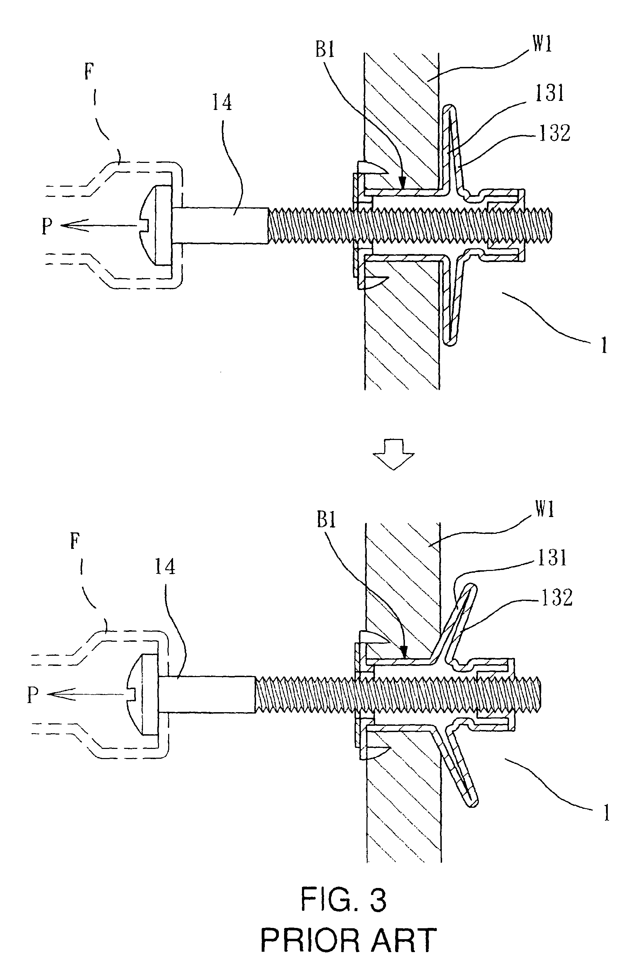

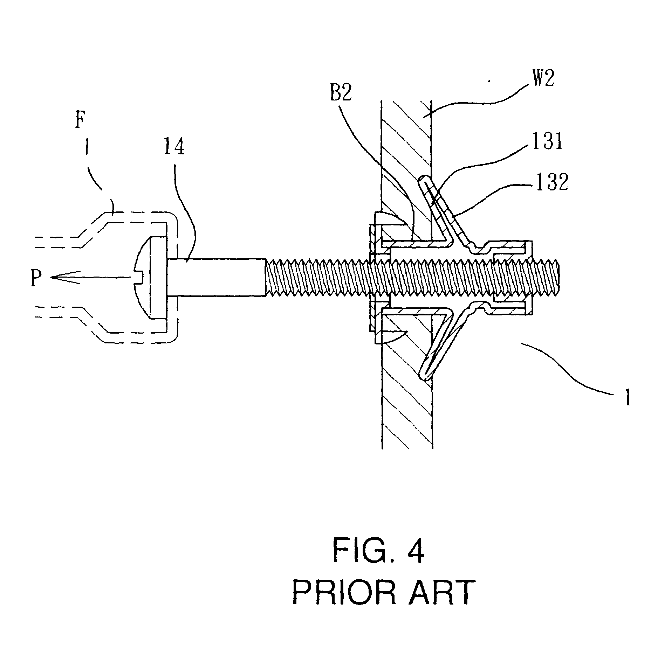

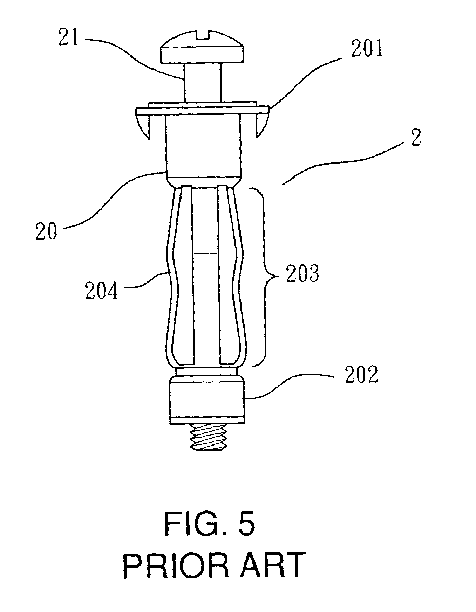

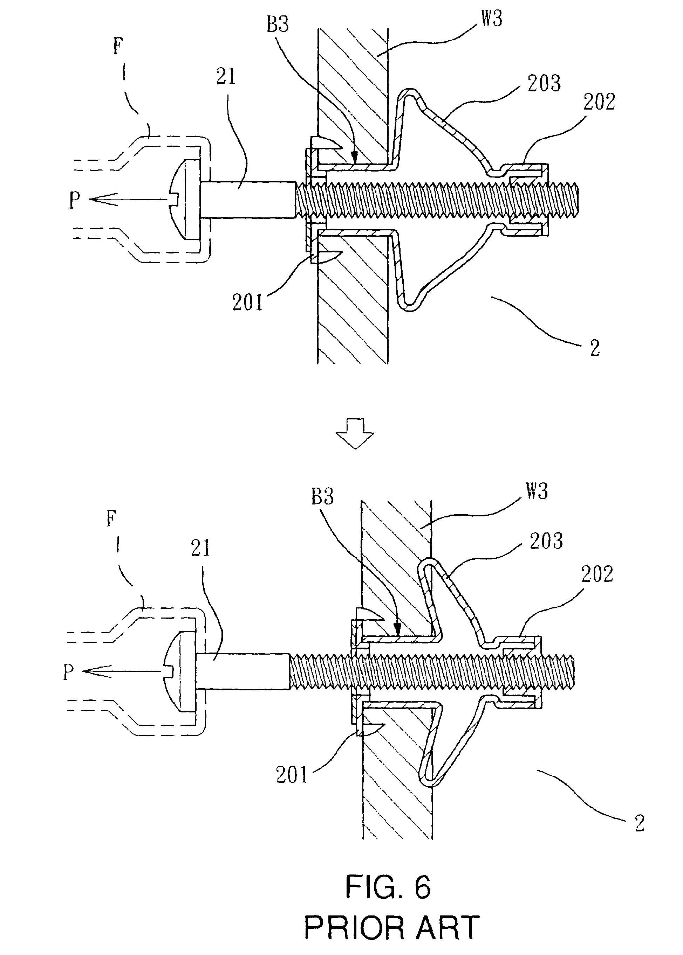

The conventional expansion screw 1 nailed on a wall (such as a gypsum panel) for hanging articles (referring to FIGS. 1 and 2) mainly includes an anchor 10 and an action zone 11 with a plurality of longitudinal slots 12 and strips 13 formed thereon. Each of the strips 13 has the center portion bulging slightly outwards to form an upper section 131 and a lower section 132 on a upper side and a lower side that are tapered on two sides. Through a tensile force tool F to exert a tensile force P on a bolt 14, the action zone 11 is expanded outwards and deformed to anchor the anchor 10 on a wall W1. The ideal condition after construction is shown in FIG. 2. But in practice the construction result is not always like the one shown in FIG. 2. A defective anchoring could happen as shown in FIG. 3. This is because the strip 13 is formed in two sections, and the upper section 131 and the lower section 132 cannot be folded and overlapped to achieve a desired bracing effect. Sometimes the upper section 131 and the lower section 132 are almost in parallel and result in the upper section 131 not clamping the surface of the wall W1 tightly to form a secure anchoring. Sometimes an excessive squeeze occurs on the rim of the working hole B1 and causes the action zone 11 to expand and tilt outwards. This could damage the wall W1 around the rim of the working hole B1 (as shown in FIG. 3). When a wall W2 is thinner (referring to FIG. 4), the action zone 11 of the expansion screw 1 could penetrate inversely into the wall W2 and damage the surface of the wall W2. To overcome the aforesaid problems, an expansion screw 2 (such as U.S. patent No. 4,986,710) has been introduced as shown in figures 5 and 6. It mainly includes an anchor nail 20 and a bolt 21. The anchor 20 has a nut 202 on one end and a head portion 201 on another end, and an action zone 203 in the middle portion. The action zone 203 includes a plurality of undulant strips 204. While such a structure can enhance the strength of the expansion screw 2, the strips 204 cannot be folded to provide a bracing effect when subject to the action of a tensile force tool F. It could even damage the wall W3 around the rim of the working hole B3 (as shown in FIG. 6).

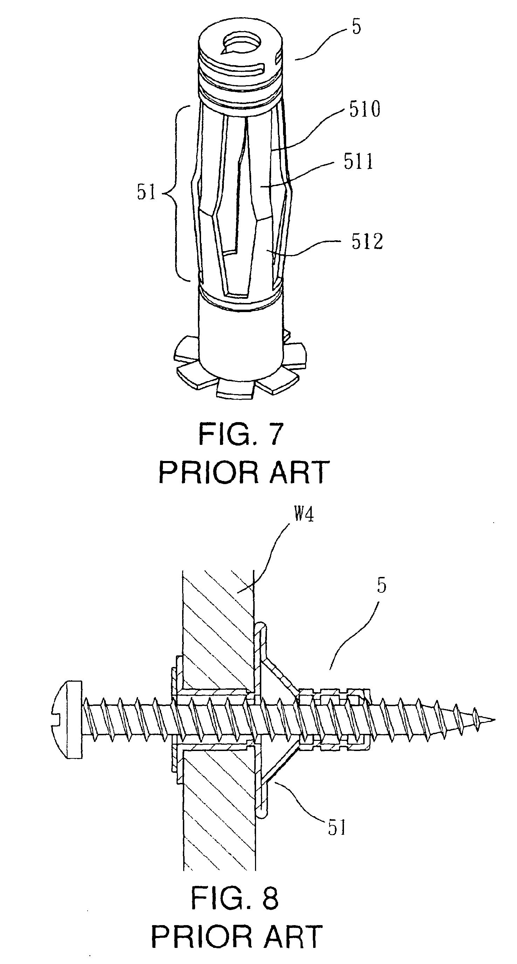

The Applicant has proposed a solution (referring to U.S. patent 6,609,866, U.K. patent No. 2379722, TWN Patent No. 509292) as shown in FIG. 7. It aims to achieve the working result shown in FIG. 8 when subject to the action of a tensile force tool F. But in practice there is still a lot to be desired. The expansion screw 5, like the conventional ones, has an action zone 51 which has strips with a two-section structure consisting of a upper section 511 and a lower section 512. During the expansion process it is difficult to achieve the folding and bracing effect shown in FIG. 8. And the expanded action zone 51 also could penetrate inversely into the wall W4 as shown in FIG. 4 and result in damage of the surface of the wall.

### SUMMARY OF THE INVENTION

In view of the aforesaid disadvantages occurred to the conventional expansion screws that mainly have an action zone consisting of two-section strips and cannot be folded and overlapped into three sections or more to achieve the bracing effect, the object of the present invention is to provide an expansion screw that has at least three sections to generate folding and bracing effect to prevent construction defect and damage of wall caused by excessive compression on the rim of the working hole. The invention provides an expansion screw according to claim 1. Further embodiments of the invention are described in the dependent claims. The expansion screw of the invention includes an anchor and a bolt. The anchor has a tubular body formed by rolling a plate. It has an action zone in the middle portion which includes a plurality of longitudinal slots and a plurality of strips. Each strip has a first section, a second section and a third section.

The first section is located on a upper side abutting a cap of the anchor and is extended downwards and outwards in an inclined manner from the edge of one end of the cap to be, in use, in contact tightly with a wall surface after expansion.

The second section is located on a lower side of the first section and connected to the first section to form an inner angle greater than 90° before use of the expansion screw. The second section inclines gradually downwards and inwards from the connecting portion with the first section and is formed at a length smaller than the first section. After expansion, the second section is, in use, folded and in contact with the first section.

The third section is located on a lower side of the second section and formed in a flat and straight manner, and is connected to the second section to form an outer angle greater than 90° before use of the expansion screw. The third section is extended downwards until reaching the edge of a head end of the anchor. After expansion it braces the first section.

The third section has a length greater than the second section to form an enhanced compression bracing on the first section after the expansion screw receives the action of a tensile force tool.

In one aspect, the first section and the second section are connected on an outward bulged location which has a first stamp line formed by stamping with a mold to serve as a bend line.

In another aspect, the second section and the third section are connected with a second stamp line formed on the connecting portion by stamping with another mold to serve as another bend line.

In still another aspect, the second section has two tapered lateral sides to form a width smaller than that of the first and third sections so that after expansion stress can be channeled and concentrated to the upper and lower ends of the second section (namely on the first and second stamp lines), and the second section can be in contact closely to the first section and draws the third section to form pressing and bracing.

In yet another aspect, the upper and lower ends of the second section, namely on the first and second stamp lines, have respectively a notch on two lateral sides to reduce the strength and channel the stress to the locations where the first and second stamp lines are formed to facilitate bending. Thereby the second section can be in contact closely with the first section and draw the third section to form pressing and bracing.

In yet another aspect, the upper and lower ends of the second section, namely on the first and second stamp lines, have respectively a groove on an inner side to reduce the strength and channel the stress to the locations where the first and second stamp lines are formed to facilitate bending. Thereby the second section can be in contact closely with the first section and draw the third section to form pressing and bracing.

In yet another aspect, the second and third sections have respectively a reinforced rib to enhance the bracing strength of the strip after expansion.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is a perspective view of a conventional expansion screw.
FIG. 2 is a sectional view of a conventional expansion screw after finish of construction.
FIG. 3 is a sectional view of a defective construction of a conventional expansion screw.
FIG. 4 is a sectional view of another defective construction of a conventional expansion screw.
FIG. 5 is a schematic view of another conventional expansion screw.
FIG. 6 is a sectional view of a defective construction of another conventional expansion screw.
FIG. 7 is a schematic view of yet another conventional expansion screw.
FIG. 8 is a sectional view of a construction condition of yet another conventional expansion screw.
FIG. 9 is a perspective view of the invention.
FIG. 10 is a plane view of the invention.
FIG. 11 is a sectional view of the invention.
FIG. 12 is a sectional view of the invention after finish of construction.
FIG. 13 is another sectional view of the invention after finish of construction.
FIG. 14 is a schematic view of a second embodiment of the second section of the invention.
FIG. 15 is a schematic view of a third embodiment of the second section of the invention.

### DESCRIPTION OF THE PREFERRED EMBODIMENTS

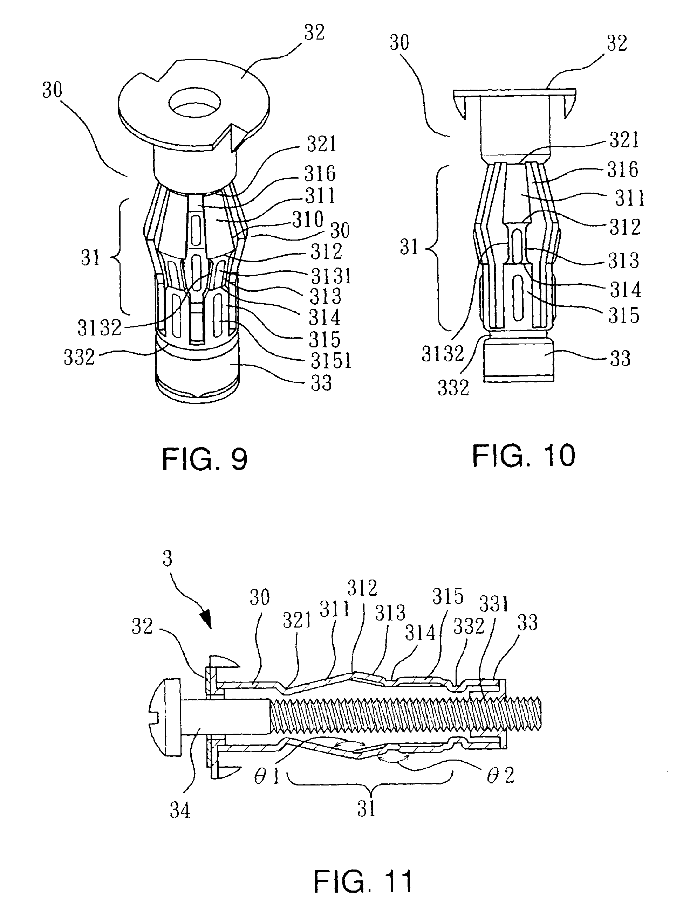

Referring to FIGS. 9 through 12, the expansion screw 3 according to the invention includes an anchor 30 and a bolt 34. The anchor 30 has a tubular body formed by rolling a plate. It has a cap 32 on a upper portion, an action zone 31 in a middle portion and a head end 33 on a lower portion, and an internal screw hole 331 inside to be screwed with the bolt 34. The action zone 31 has a plurality of longitudinal slots 316 and a plurality of strips 310. Each of the strips 310 has a first section 311, a first stamp line 312, a second section 313, a second stamp line 314 and a third section 315.

The first section 311 is located on an upper portion of the strip 310 adjacent to the cap 32 and is extended downwards and outwards in an inclined manner from an end edge 321 of the cap 32 to be in contact tightly with the surface of a wall W after expansion.

The first stamp line 312 is located on the connecting portion of the first section 311 and the second section 313 on an outward extended location and is a bend line formed by stamping with a mold.

The second section 313 is located below the first section 311 and connected to the first section 311 to form an inner angle θ 1 greater than 90°. The second section 313 inclines gradually downwards and inwards and has a length smaller than the first section 311 to be folded in contact with the first section 311 after expansion.

The second stamp line 314 is on the connecting portion of the second section 313 and the third section 315, and is another bend line formed by stamping with another mold.

The third section 315 is located below the second section 313, and is flat and straight, and connected to the second section 313 to form an outer angle θ 2 greater than 90° . The third section 315 is extended downwards until reaching an edge 332 of the head end 33. After expansion it braces the first section 311.

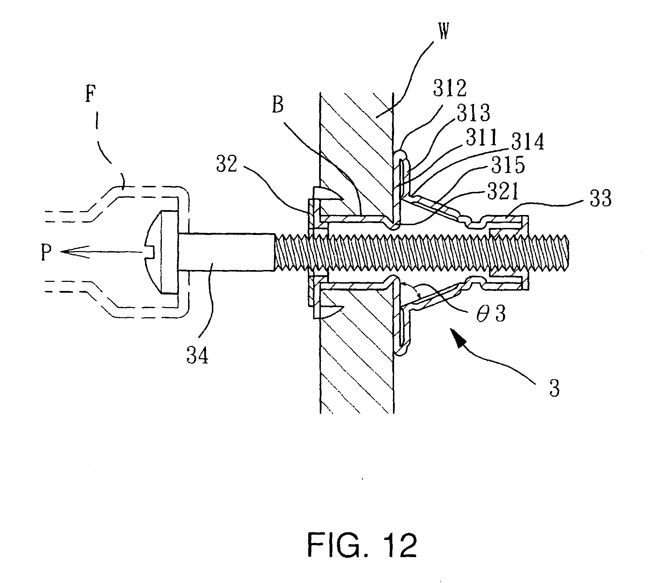

By means of the construction set forth above, when in use, the expansion screw 3 is inserted into a working hole B of the wall W (as shown in FIG. 12). The bolt 34 is pulled by a tensile force P from a tensile force tool F. Due to the action zone 31 being the weakest portion of the entire anchor nail 30, it is expanded outside and deformed. As the second section 313 is much weaker than the first and third sections 311 and 315, and two lateral sides 3132 thereof are tapered at a smaller width to form a weaker portion, stress is channeled and concentrated on the first and second stamp lines 312 and 314 to form bending, and they are drawn towards the nail cap 32. The first section 311 is moved to be in contact with the surface of the wall W first; then the second section 313 is folded due to the continuous tensile force P to be in contact with the first section 311 to form an overlapping condition and draw the third section 315 forwards. Due to the third section 315 being longer than the second section 313, thus a bracing angle θ 3 is formed between the third section 315 and the first section 311 to form a pressed anchoring to make the first section 311 in contact with the surface of the wall W tightly, and the second section 313 is folded over the first section 311 closely. With the pressing and bracing of the third section 315, a three-section folding and bracing effect is generated. Thus fastening is firmer. The compression is evenly distributed on the contact area of the first section 311 and the surface of the wall W (rather local points of a small portion), hence stress concentration does not occur around the rim of the working hole B, and construction quality can be enhanced.

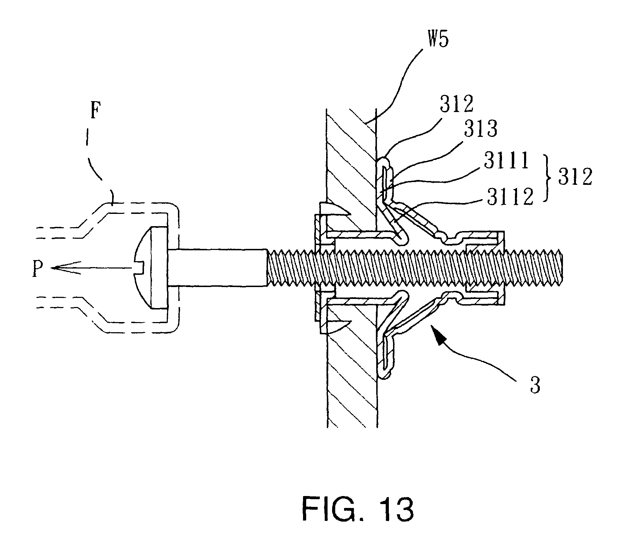

Refer to FIG. 13 for the invention in use on a wall W5 of a smaller thickness. After the first section 311 is expanded, a front side 3112 thereof will be bent and suspended due to the channeling force, while a rear side 3111 is still in close contact with the surface of the wall W5. Hence the inverse penetration into the wall after expansion that occurs to the conventional expansion screw does not happen to the invention, and the folding and bracing effect can be maintained.

In addition, the second section 313 and third section 315 may have respectively a reinforced rib 3131 and 3151 to increase the strength to ensure that the bending spots take place on the first and second stamp lines 312 and 314.

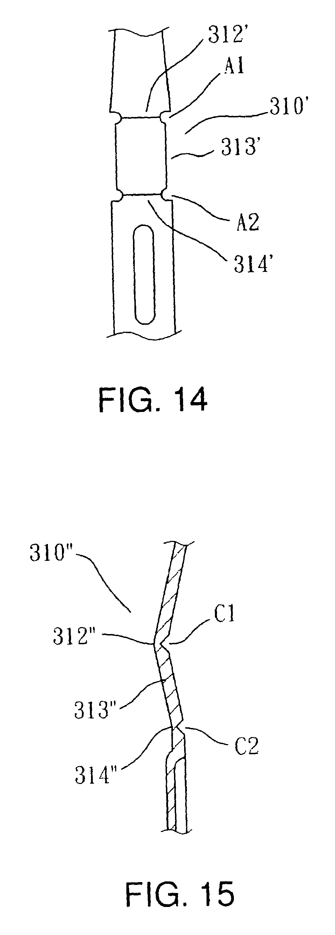

The implementation of the second section may adopt other forms. Refer to FIG. 14 for another embodiment of the second section 313'. It has notches A1 and A2 formed respectively on two lateral sides of the first and second stamp lines 312' and 314' to weaken the upper end and lower end (namely where the first and second stamp lines 312' and 314' are located) of the second section 313', and to channel and concentrate the stress to facilitate bending of the second section 313'.

Refer to FIG. 15 for yet another embodiment of the second section 313". On an the inner side where the first and second stamp lines 312" and 314" are formed, there are transverse grooves C 1 and C2 to weaken the upper end and lower end (namely where the first and second stamp lines 312" and 314: are located) of the second section 313" to channel and concentrate the stress to facilitate bending of the second section 313".

In short, the invention can improve construction quality. By overlapping the first and second sections after expansion, and with the pressing and bracing of the third section, it generates a bracing support of multiple sections to prevent defective construction and excessive compression on the rim of the construction hole. It provides a significant improvement over the conventional techniques.

## Claims

1. An expansion screw (3) comprising
an anchor (30) and a bolt (34), the anchor (30) including a tubular body formed by rolling a plate that has an action zone (31) in a middle portion, and including a cap (32) on an upper portion and a head end (33) on a lower portion, the action zone (31) having a plurality of longitudinal slots (316) and a plurality of strips (310), each of the strips (310) having a first section (311), a second section (313; 313'; 313") and a third section (315), **characterized in that**:
the first section (311) is located on an upper side of the strip (310) adjacent to the cap (32) and extended downwards and outwards in an inclined manner from an edge of one end of the cap (32) to be in use, in contact tightly with the surface of a wall (W) after expansion of the expansion screw (3);
the second section (313; 313'; 313'') is located on a lower side of the first section (311) and connected to the first section (311) to form an inner angle greater than 90° before use of the expansion screw, and inclines gradually downwards and inwards at a length smaller than the first section (311) to be, in use, folded in contact with the first section (311) after the expansion; and
the third section (315) is located on a lower side of the second section (313; 313'; 313'') and formed in a flat and straight manner to connect to the second section 313; 313'; 313'') to form an outer angle greater than 90° before use of the expansion screw and is extended downwards until reaching an edge of the head end (33) of the anchor (30) and formed at a length greater than the second section to brace, in use, the first section after the expansion.

2. The expansion screw (3) of claim 1, wherein the connecting portion of the first section (311) and the second section (313; 313'; 313'') is extended outwards and has a first stamp line (312'; 312'') formed by stamping with a mold.

3. The expansion screw (3) of claim 1, wherein the connecting portion of the second section (313; 313'; 313'') and the third section (315) has a second stamp line (314'; 314") formed by stamping with another mold.

4. The expansion screw (3) of claim 1, wherein the second section (313; 313'; 313'') has two lateral sides shrinking inwards at a width smaller than the width of the first section (311) and the third section (315).

5. The expansion screw (3) of claim 1, wherein the second section (313') has an upper end and a lower end that have respectively a notch (A1, A2).

6. The expansion screw of claim 1, wherein the second section (313") has an upper end and a lower end that have respectively a transverse groove (C1, C2) on an inner side.

## Patentansprüche

1. Spreizschraube (3), aufweisend:
einen Anker (30) und einen Schaft (34), wobei der Anker (30) einen röhrenförmigen Körper, ausgebildet durch Walzen einer Scheibe, aufweist, der eine Wirkungszone (31) in einem mittleren Abschnitt aufweist, und einen Deckel(32) an einem oberen Abschnitt und ein Kopfende (33) an einem unteren Abschnitt aufweist, wobei die Wirkungszone (31) eine Mehrzahl von Längsschlitzen (316) und eine Mehrzahl von Streifen (310) aufweist, wobei jeder der Streifen (310) einen ersten Abschnitt (311), einen zweiten Abschnitt (313, 313', 313'') und einen dritten Abschnitt (315) aufweist, **dadurch gegenzeichnet, dass:**
der erste Abschnitt (311) an einer oberen Seite des Streifens (310), angrenzend an den Deckel (32), angeordnet ist und sich schräg von einem Rand des einen Endes des Deckels (32) nach unten und nach außen erstreckt, so dass er bei der Verwendung nach dem Spreizen der Spreizschraube (3) mit einer Fläche der Wand (W) eng in Kontakt ist,
der zweite Abschnitt (313, 313', 313") an einer unteren Seite des ersten Abschnitts (311) angeordnet ist und mit dem ersten Abschnitt verbunden ist, so dass er vor der Verwendung der Spreizschraube einen inneren Winkel formt, der größer ist als 90°, und der allmählich nach unten und nach innen sich neigt und eine Länge hat, die kleiner ist als die des erste Abschnitts (311), so dass er bei der Verwendung nach dem Spreizen zusammenklappt, in Kontakt mit dem ersten Abschnitt (311) eingefaltet wird, und
der dritte Abschnitt (315) an einer unteren Seite des zweiten Abschnitts (313, 313', 313'') angeordnet ist und in einer flachen und geraden Art ausgebildet ist, so dass er an dem zweiten Abschnitt (313, 313', 313") so angeschlossen ist, dass er einen äußeren Winkel bildet, der vor der Verwendung größer als 90° ist, und der sich nach unten bis zum Erreichen eines Randes des Kopfendes (33) des Ankers (30) erstreckt, und eine Länge hat, die größer ist als die des zweiten Abschnitts, so dass er den ersten Abschnitt, bei Verwendung, nach dem Spreizen, abstützt.

2. Spreizschraube (3) nach Anspruch 1, wobei der Verbindungsteil des ersten Abschnitts (311) und des zweiten Abschnitts (313, 313', 313'') sich nach außen erstreckt und eine durch Stanzen mit einem Formwerkzeugs ausgebildete erste Stanzlinie (312', 312") aufweist.

3. Spreizschraube (3) nach Anspruch 1, wobei der Verbindungsteil des zweiten Abschnitts (313, 313', 313'') und des dritte Abschnitts (315) eine zweite Stanzlinie (314', 314'') aufweisen, die durch Stanzen mit einem anderen Formwerkzeug ausgebildet ist.

4. Spreizschraube (3) nach Anspruch 1, wobei der zweite Abschnitt (313, 313', 313'') zwei laterale Seiten aufweist, die sich mit einer kleineren Breite als die Breite des ersten Abschnitts (311) und die des dritten Abschnitts (315) nach innen verjüngen.

5. Ausdehnungsschraube (3) nach Anspruch 1, wobei der zweite Abschnitt (313') ein oberes Ende und ein unteres Ende aufweist, die jeweils eine Aussparung (A1, A2) aufweisen.

6. Ausdehnungsschraube nach Anspruch 1, wobei der zweite Abschnitt (313") ein oberes Ende und ein unteres Ende aufweist, die jeweils eine querlaufende Nut (C1, C2) an der Innenseite aufweisen.

## Revendications

1. Vis à expansion (3) comprenant
un élément d'ancrage (30) et un boulon (34), l'élément d'ancrage (30) comportant un corps tubulaire formé en laminant une plaque qui présente une zone d'action (31) dans une partie centrale, et comportant un capuchon (32) sur une partie supérieure et une extrémité de tête (33) sur une partie inférieure, la zone d'action (31) présentant une pluralité de fentes longitudinales (316) et une pluralité de bandes (310), chacune des bandes (310) présentant une première section (311), une deuxième section (313 ; 313' ; 313") et une troisième section (315), **caractérisée en ce que** :
la première section (311) est positionnée sur un côté supérieur de la bande (310) adjacent au capuchon (32) et étendu vers le bas et vers l'extérieur d'une manière inclinée depuis un bord d'une extrémité du capuchon (32) pour, au cours d'une utilisation, être étroitement en contact avec la surface d'une paroi (W) après l'expansion de la vis à expansion (3) ;
la deuxième section (313 ; 313' ; 313") est positionnée sur un côté inférieur de la première section (311) et connectée à la première section (311) pour former un angle interne supérieur à 90° avant l'utilisation de la vis à expansion, et s'incline progressivement vers le bas et vers l'intérieur sur une longueur inférieure à la première section (311) pour, au cours d'une utilisation, être pliée en contact avec la première section (311) après l'expansion ; et
la troisième section (315) est positionnée sur un côté inférieur de la deuxième section (313 ; 313' ; 313") et formée de manière plate et rectiligne pour se connecter à la deuxième section (313 ; 313' ; 313") pour former un angle externe supérieur à 90° avant l'utilisation de la vis à expansion, et est étendue vers le bas jusqu'à atteindre un bord de l'extrémité de tête (33) de l'élément d'ancrage (30) et formée sur une longueur supérieure à la deuxième section pour étayer, au cours d'une utilisation, la première section après l'expansion.

2. Vis à expansion (3) selon la revendication 1, dans laquelle la partie de connexion de la première section (311) et de la deuxième section (313 ; 313' ; 313") est étendue vers l'extérieur et présente une première ligne d'estampage (312' ; 312") formée par estampage avec un moule.

3. Vis à expansion (3) selon la revendication 1, dans laquelle la partie de connexion de la deuxième section (313 ; 313' ; 313") et de la troisième section (315) présente une seconde ligne d'estampage (314' ; 314") formée par estampage avec un autre moule.

4. Vis à expansion (3) selon la revendication 1, dans laquelle la deuxième section (313 ; 313' ; 313") présente deux côtés latéraux en retrait vers l'intérieur à une largeur inférieure à la largeur de la première section (311) et de la troisième section (315).

5. Vis à expansion (3) selon la revendication 1, dans laquelle la deuxième section (313') présente une extrémité supérieure et une extrémité inférieure qui présentent respectivement une encoche (A1, A2).

6. Vis à expansion selon la revendication 1, dans laquelle la deuxième section (313") présente une extrémité supérieure et une extrémité inférieure qui présentent respectivement une rainure transversale (C1, C2) sur un côté interne.
